# EUROPEAN PATENT APPLICATION

(11) **EP 4 395 389 A1**
(43) Date of publication of application: **03.07.2024**
(21) Application number: 22861200.8
(22) Date of filing: 17.08.2022
(51) Int. Cl.: H04W 8/22, H04W 72/20

(54) **TERMINAL, WIRELESS COMMUNICATION METHOD, AND BASE STATION**

(30) Priority: 27.08.2021 JP 2021139364
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/031032
(87) International publication number: WO 2023/026912

(57) **Abstract**

A terminal according to an aspect of the present disclosure includes: a transmitting section that transmits capability information indicating a maximum number of targets regarding overlapping between a plurality of physical downlink control channel (PDCCH) candidates; and a control section that determines, based on the maximum number one or more PDCCH candidates to be monitored . According to an aspect of the present disclosure, a PDCCH candidate/SS set/CORESET to be monitored can be appropriately determined.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing lower latency, and the like (Non Patent Literature 1). In addition, the specifications of LTE-Advanced (3GPP releases (Rels.) 10 to 14) have been drafted for the purpose of further increasing capacity and advancement of LTE (third generation partnership project (3GPP) Rels. 8 and 9).

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In order to improve reliability in a future radio communication system, repetition of a physical downlink control channel (PDCCH) has been studied.

However, it is not clear how a PDCCH candidate/SS set/CORESET to be monitored is determined among PDCCH candidates/SS sets/CORESETs for a plurality of repetitions with respect to the limit (maximum number). When the PDCCH candidate/SS set/CORESET to be monitored is not appropriately determined, there is a possibility of causing a decrease in communication quality, a decrease in communication throughput, and the like.

Thus, one object of the present disclosure is to provide a terminal, a radio communication method, and a base station that appropriately determines a PDCCH candidate/SS set/CORESET to be monitored.

### Solution to Problem

A terminal according to an aspect of the present disclosure includes: a transmitting section that transmits capability information indicating a maximum number of targets regarding overlapping between a plurality of physical downlink control channel (PDCCH) candidates; and a control section that determines, based on the maximum number, one or more PDCCH candidates to be monitored.

### Advantageous Effects of Invention

According to one aspect of the present disclosure, a PDCCH candidate/SS set/CORESET to be monitored can be appropriately determined.

### Brief Description of Drawings

Figs. 1A and 1B are diagrams illustrating an example of a maximum number of PDCCH candidates to be monitored.
Figs. 2A and 2B are diagrams illustrating an example of a maximum number of non-overlapped CCEs.
Fig. 3 is a diagram illustrating an example of an overlapping event.
Fig. 4 is a diagram illustrating an example of a schematic configuration of a radio communication system according to one embodiment.
Fig. 5 is a diagram illustrating an example of a configuration of a base station according to one embodiment.
Fig. 6 is a diagram illustrating an example of a configuration of a user terminal according to one embodiment.
Fig. 7 is a diagram illustrating an example of a hardware configuration of the base station and the user terminal according to one embodiment.

### Description of Embodiments

### (TCI, Spatial Relation, and QCL)

In NR, it has been studied to control reception processing (for example, at least one of reception, demapping, demodulation, and decoding) and transmission processing (for example, at least one of transmission, mapping, precoding, modulation, and coding) in UE of at least one of a signal and a channel (expressed as a signal/channel) based on a transmission configuration indication state (TCI state).

The TCI state may represent what is applied to a downlink signal/channel. Those corresponding to the TCI state applied to an uplink signal/channel may be expressed as a spatial relation.

The TCI state is information regarding a quasi-co-location (QCL) of the signal/channel, and may also be referred to as, for example, a spatial Rx parameter, spatial relation information, or the like. The TCI state may be configured in the UE for each channel or each signal.

The QCL is an indicator indicating a statistical property of a signal/channel. For example, when one signal/channel and another signal/channel have a QCL relation may mean that it is possible to assume that at least one of Doppler shift, Doppler spread, an average delay, a delay spread, and a spatial parameter (for example, a spatial Rx parameter) is identical (in QCL with respect to at least one of these) between the plurality of different signals/channels.

Note that the spatial Rx parameter may correspond to a reception beam of the UE (for example, a reception analog beam), and the beam may be specified based on a spatial QCL. The QCL (or at least one element of the QCL) in the present disclosure may be replaced with spatial QCL (sQCL).

A plurality of types of QCL (QCL types) may be defined. For example, four QCL types A to D of different parameters (or parameter sets) that are assumable to be identical can be provided, which parameters (which may also be referred to as QCL parameters) are described below:
- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): Spatial Rx parameter.

It may be referred to as a QCL assumption for the UE to assume that a certain control resource set (CORESET), channel, or reference signal has a specific QCL (for example, QCL type D) relation with another CORESET, channel, or reference signal.

The UE may determine at least one of a transmission beam (Tx beam) and a reception beam (Rx beam) of a signal/channel based on the TCI state of the signal/channel or the QCL assumption.

The TCI state may be, for example, information regarding the QCL of a target channel (in other words, a reference signal (RS) for the channel) and another signal (for example, another RS). The TCI state may be configured (indicated) by higher layer signaling, physical layer signaling, or a combination thereof.

Note that, a channel/signal to which the TCI state is applied may be referred to as a target channel/reference signal (RS), simply a target, or the like, and the other signal may be referred to as a reference reference signal (reference RS), a source RS, simply a reference, or the like.

A channel for which a TCI state or spatial relation is configured (specified) may be, for example, at least one of a physical downlink shared channel (PDSCH), a physical downlink control channel (PDCCH), a physical uplink shared channel (PUSCH), and a physical uplink control channel (PUCCH).

In addition, an RS having a QCL relation with the channel may be, for example, at least one of a synchronization signal block (SSB), a channel state information reference signal (CSI-RS)), a sounding reference signal (SRS), a tracking CSI-RS (also referred to as a tracking reference signal (TRS)), a QCL detection reference signal (also referred to as a QRS), a demodulation reference signal (DMRS), or the like.

The SSB is a signal block including at least one of a primary synchronization signal (PSS), a secondary synchronization signal (SSS), and a broadcast channel (physical broadcast channel (PBCH)). The SSB may be referred to as an SS/PBCH block.

An RS of QCL type X in a TCI state may mean an RS in a QCL type X relation with (DMRS of) a certain channel/signal, and this RS may be referred to as a QCL source of QCL type X in the TCI state.

### (Collision of Multiple Channels/Signals)

In the previous Rel. 15/16 NR specifications, the UE can receive, detect or monitor only channels/signals of the same QCL type D at the same time, but cannot receive, detect or monitor multiple channels/signals of different QCL type D at the same time. Therefore, in order to ensure that multiple channels/signals correspond to the same QCL type D in a case where the multiple channels/signals collide (in other words, transmitted/received at overlapping times), or to avoid such a case, the constraint (may be referred to as a priority rule, a QCL application rule, or the like) described below is defined in the Rel. 15/16 NR specifications.

Note that, in the present disclosure, collision of multiple channels/signals may mean that reception (or transmission) of multiple channels/signals of different QCL type D in the same time resource (period) is scheduled (or configured) (QCL type D collision).

In addition, in the present disclosure, the fact that (the reference RS of) the QCL type D of a certain channel/signal is different from (the reference RS of) the QCL type D of another channel/signal may mean that a beam used for communication of the certain channel/signal is different from a beam used for communication of the another channel/signal. In the present disclosure, the fact that (the reference RS of) the QCL type D of a certain channel/signal is different from (the reference RS of) the QCL type D of another channel/signal may be expressed as that the QCL type D of the certain channel/signal is different from the QCL type D of the another channel/signal, their QCL type D characteristics are different, "QCL type D" is different, or the like.

### <PDCCH vs. PDCCH>

In the case that the UE is configured with the single cell operation or that the operation of the carrier aggregation in the same frequency band is configured, and when PDCCH candidates are monitored in overlapping monitoring occasions in the plurality of CORESETs having the same or different QCL type D characteristics for active DL BWPs of the one or more cells, the PDCCH in only a certain CORESET and a CORESET having the same QCL type D characteristics as the CORESET among the plurality of CORESETs is monitored.

The "certain CORESET" corresponds to the common search space (CSS) set with the smallest index in the cell with the smallest index including the CSS set if the CSS set exists, and corresponds to, if the CSS set does not exist, the UE-specific search space (USS) set with the smallest index in the cell with the smallest index. The smallest USS set index is determined across all USS sets with at least one PDCCH candidate in overlapping PDCCH monitoring occasions.

In short, when monitoring the PDCCH candidates in overlapping monitoring occasions, the UE determines a monitoring target CORESET according to the priority rule that the CSS set is preferentially monitored over the USS set, and between SS sets of the same type (CSS or USS), an SS set with a smaller index (that is, an SS set with a smaller cell index; and when the cell index is the same, an SS set with a smaller SS set index) is preferentially monitored.

Note that the SS set index may correspond to a value configured by an RRC parameter SearchSpaceId for identifying a search space. Note that, in the present disclosure, the CSS set index may mean an SS set index for an SS set whose search space type (RRC parameter "searchSpaceType") indicates CSS. In addition, in the present disclosure, the USS set index may mean an SS set index for an SS set whose search space type (RRC parameter "searchSpaceType") indicates USS.

### (Multi-TRPs)

In NR, studies are underway to allow one or more transmission/reception points (TRPs)(multi-TRPs (MTRPs)) to perform DL transmission to the UE by using a single panel or a plurality of panels (multi-panels). In addition, studies are underway to allow the UE to perform UL transmission to one or more TRPs by using a single panel or a plurality of panels.

Note that the plurality of TRPs may correspond to the same cell identifier (ID), or may correspond to different cell IDs. The cell ID may be a physical cell ID or a virtual cell ID.

The multi-TRPs (for example, TRPs #1 and #2) are connected by an ideal/non-ideal backhaul, and information, data, and the like may be exchanged. A different codeword (CW) and a different layer may be transmitted from each TRP of the multi-TRPs. Non-coherent joint transmission (NCJT) may be used as one form of multi-TRP transmission.

In the NCJT, for example, TRP #1 performs modulation mapping and layer mapping of a first codeword, uses first precoding in a first number of layers (for example, two layers), and transmits a first PDSCH. In addition, TRP #2 performs modulation mapping and layer mapping of a second codeword, uses second precoding in a second number of layers (for example, two layers), and transmits a second PDSCH.

Note that a plurality of PDSCHs (multi-PDSCHs) subjected to the NCJT may be defined as partially or completely overlapping regarding at least one of time domain or frequency domain. That is, the first PDSCH from a first TRP and the second PDSCH from a second TRP may overlap in at least one of time resource or frequency resource.

The first PDSCH and the second PDSCH may be assumed not to be in quasi-co-location (QCL) relation (not quasi-co-located). Reception of the multi-PDSCHs may be replaced with simultaneous reception of PDSCHs that are not of a certain QCL type (for example, QCL type D).

A plurality of PDSCHs (which may be referred to as multiple PDSCHs) from the multi-TRPs may be scheduled by using one DCI (single DCI, single PDCCH) (single master mode, single-DCI-based multi-TRPs). A plurality of PDSCHs from the multi-TRPs may be scheduled by using a plurality of DCI (multi-DCI or multiple PDCCHs) (multi-master mode, multi-DCI-based multi-TRPs).

In Ultra-Reliable and Low Latency Communications (URLLC) for multi-TRPs, support of PDSCH (transport block (TB) or codeword (CW)) repetition across the multi-TRPs has been studied. It has been studied that a repetition scheme (URLLC schemes, reliability enhancement schemes, e.g., Schemes 1a, 2a, 2b, 3, and 4) across multi-TRPs on a frequency domain, a layer (spatial) domain, or a time domain is supported. In Scheme 1a, multi-PDSCHs from multi-TRPs are subjected to space division multiplexing (SDM). In Schemes 2a and 2b, PDSCHs from multi-TRPs are subjected to frequency division multiplexing (FDM). In Scheme 2a, the redundancy version (RV) is the same for multi-TRPs. In Scheme 2b, the RV may be the same or different for multi-TRPs. In Schemes 3 and 4, multi-PDSCHs from multi-TRPs are subjected to time division multiplexing (TDM). In Scheme 3, multi-PDSCHs from multi-TRPs are transmitted in one slot. In Scheme 4, multi-PDSCHs from multi-TRPs are transmitted in different slots.

Such a multi-TRPs scenario can perform more flexible transmission control using a high-quality channel.

In RRC configuration information for linking a plurality of pairs of PDCCHs and PDSCHs having a plurality of TRPs, one control resource set (CORESET) in PDCCH configuration information (PDCCH-Config) may correspond to one TRP, to support intra-cell (having the same cell ID) and inter-cell (having different cell IDs) multi-TRP transmission based on the plurality of PDCCHs.

When at least one of the conditions 1 and 2 described below is satisfied, the UE may determine that it is multi-DCI-based multi-TRPs. In this case, the TRP may be replaced with a CORESET pool index.

### [Condition 1]

A CORESET pool index of 1 is configured.

### [Condition 2]

Two different values (for example, 0 and 1) of the CORESET pool index are configured.

When the condition described below is satisfied, the UE may determine that it is single-DCI-based multi-TRPs. In this case, the two TRPs may be replaced with two TCI states indicated by the MAC CE/DCI.

### [Condition]

In order to indicate one or two TCI states for one codepoint in the TCI field in the DCI, an "enhanced TCI states activation/deactivation for UE-specific PDSCH MAC CE" is used.

The DCI for the common beam indication may be a UE-specific DCI format (for example, DL DCI format (for example, 1_1 and 1_2), UL DCI format (for example, 0_1 and 0_2)) or a UE-group common DCI format.

### (Multi-TRP PDCCH)

For reliability of multi-TRP PDCCH based on a non-single frequency network (SFN), Studies 1 to 3 below have been studied.

[Study 1] Coding/rate matching is based on one repetition, and the same coded bit is repeated in other repetitions.

[Study 2] Each repetition has the same number of control channel elements (CCEs) and the same coded bits, and corresponds to the same DCI payload.

[Study 3] Two or more PDCCH candidates are explicitly linked to each other. The UE is acknowledged the link before decoding.

Choices 1-2, 1-3, 2, and 3 below for PDCCH repetition have been studied.

### [Choice 1-2]

Two sets of PDCCH candidates (within a given search space (SS) set) are respectively associated with two TCI states of a CORESET. Here, the same CORESET, the same SS set, and PDCCH repetition in different monitoring occasions are used.

### [Choice 1-3]

Two sets of PDCCH candidates are respectively associated with two SS sets. Both SS sets are associated with a CORESET, and each SS set is associated with only one TCI state of the CORESET. Here, the same CORESET and two SS sets are used.

### [Choice 2]

One SS set is associated with two different CORESETs.

### [Choice 3]

Two SS sets are respectively associated with two CORESETs.

In this way, it has been studied that two PDCCH candidates in two SS sets for PDCCH repetition are supported and the two SS sets are explicitly linked.

### (Determination of PDCCH Candidate Allocation)

In Rel. 15 NR, for common search space (CSS), a network (NW) ensures that overbooking (excessive allocation) does not occur. The UE does not assume that for monitored PDCCH candidates per slot and non-overlapped control channel elements (CCE), CCS sets are configured that cause the corresponding total number or number per scheduled cell to exceed the corresponding maximum number per slot.

In Rel. 15 NR, for a secondary cell (SCell), the network (NW) ensures that overbooking based on a case where carrier aggregation (CA) is not performed (non-CA case) does not occur. For cross-carrier scheduling when a scheduling cell and a scheduled cell have multiple DL BWPs with the same subcarrier spacing (SCS) configuration µ, or scheduling of the same cell, the UE does not assume that the number of PDCCH candidates and the number of non-overlapped CCEs per slot on the SCell will be greater than the corresponding number per slot that the UE can monitor on the SCell.

The UE does not assume to monitor PDCCHs in a USS set that do not have allocated PDCCHs for monitoring.

First, PDCCH candidates for a CSS set are allocated, and then PDCCH candidates for a UE-specific search space (USS) set are allocated according to ascending order of search space set indexes (IDs) (in order from the lowest search space set ID).

The CSS has a higher priority than the USS.

All PDCCH candidates of a USS set with a lower SS set ID are mapped before PDCCH candidates of a USS set with a higher SS set ID are mapped. If all PDCCH candidates in a certain SS set (USS) cannot be mapped (when there is no sufficient room (the number of remaining PDCCH candidates up to the maximum number) for PDCCH candidates for the SS set), PDCCH candidates in the SS set and a subsequent SS set are dropped (not mapped). In the order of SS set IDs, an SS set after a certain SS set may be referred to as a subsequent SS set.

If a higher layer index is configured per CORESET for the UE that supports multi-PDCCH (multi-DCI)-based multi-TRP transmission, the UE may support the principle below for the maximum number of BDs and CCEs for multi-DCI-based multi-TRP transmission:

For a CORESET configured for the same TRP (same higher layer index), the maximum number of PDCCH candidates monitored per slot for a certain DL BWP may not exceed the limit M_{PDCCH}^{max,slot,µ} of Rel. 15, and the maximum number of non-overlapped CCEs may not exceed the limit C_{PDCCH}^{max,slot,µ} of Rel. 15. The higher layer index may be configured for each PDCCH configuration information (PDCCH-Config) and for each CORESET. The higher layer index may correspond to the TRP.

The UE may indicate the capability to monitor the PDCCH according to one or more combinations (X,Y). One span may be a consecutive symbol in which the UE is configured to monitor the PDCCH in one slot. Each PDCCH monitoring occasion may be within one span. If the UE monitors the PDCCH on one cell according to the combination (X,Y), the UE supports a plurality of PDCCH monitoring occasions in any symbol of one slot with a minimum time separation of X symbols between the first symbols of two consecutive spans including spanning to a plurality of slots. One span starts at the first symbol at which a certain PDCCH monitoring occasion starts and ends at the last symbol at which the certain PDCCH monitoring occasion ends, and the number of symbols of the span is up to Y.

A maximum number M_{PDCCH}^{max, (X, Y),µ} of monitored PDCCH candidates in one span for a combination (X,Y) for a DL BWP with subcarrier spacing (SCS) configuration µ∈{0,1} for a single serving cell may be defined in the specifications. A maximum number C_{PDCCH}^{max, (X, Y),µ} of non-overlapped CCEs in one span for a combination (X,Y) for a DL BWP with subcarrier spacing (SCS) configuration u{0,1} for a single serving cell may be defined in the specifications.

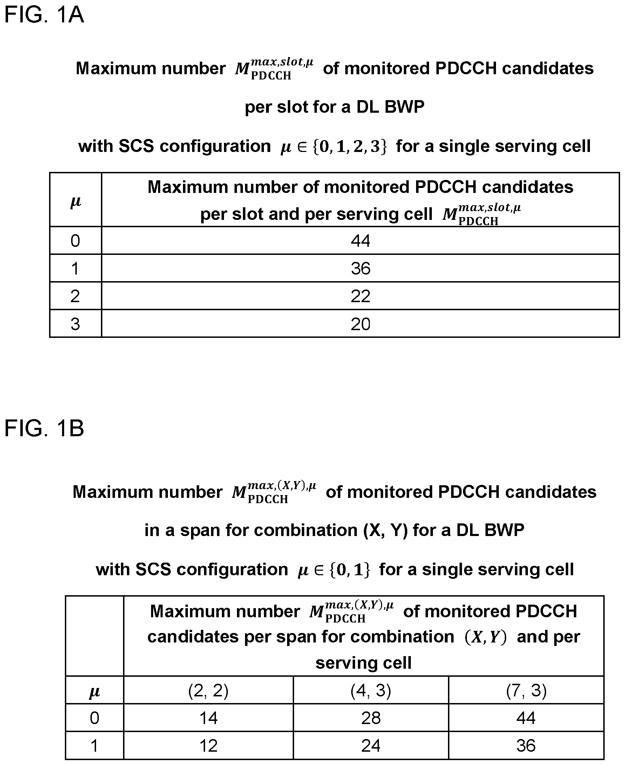

Fig. 1A illustrates the maximum number M_{PDCCH}^{max,slot,µ} of monitored PDCCH candidates per slot for a DL BWP with SCS configuration µ∈{0,1,2,3} for operation using a single serving cell. Fig. 1B illustrates the maximum number M_{PDCCH}^{max, (X, Y),µ} of monitored PDCCH candidates in one span for a combination (X,Y) for a DL BWP with subcarrier spacing (SCS) configuration µ∈{0,1} for a single serving cell.

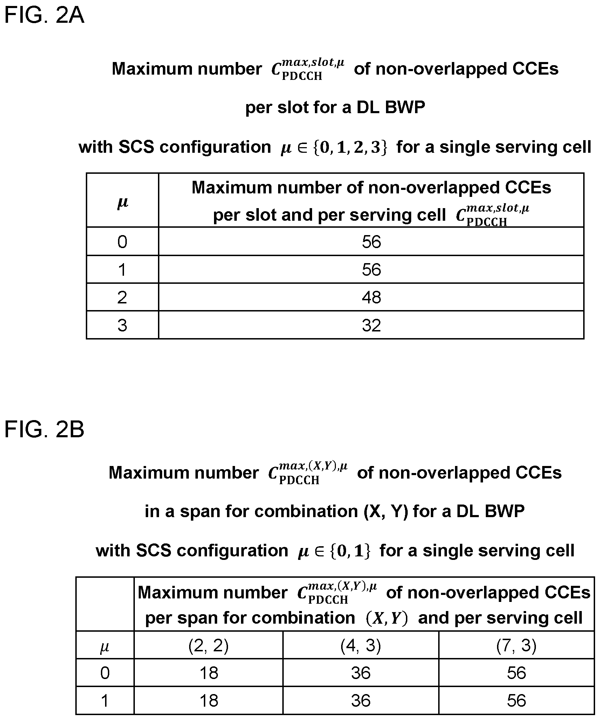

Fig. 2A illustrates the maximum number C_{PDCCH}^{max,slot,µ} of non-overlapped CCEs per slot for a DL BWP with SCS configuration µ∈{0,1,2,3} for operation using a single serving cell. Fig. 2B illustrates the maximum number M_{PDCCH}^{max, (X, Y),µ} of non-overlapped CCEs in one span for a combination (X,Y) for a DL BWP with subcarrier spacing (SCS) configuration µ∈{0,1} for a single serving cell.

When the CCEs for the PDCCH candidates correspond to different CORESET indexes or different first symbols for receiving the respective PDCCH candidates, the CCEs do not overlap.

If Σ_{µ=0}³N_{cells}^{DL,µ} ≤ N_{cells}^{cap}, and the UE is configured with N_{cells}^{DL,µ} DL cells with a DL BWP with SCS configuration µ, the UE is not required to monitor PDCCH candidates greater than M_{PDCCH}^{total,slot,µ} = M_{PDCCH}^{max,slot,µ} or non-overlapped CCEs greater than C_{PDCCH}^{total,slot,µ} = C_{PDCCH}^{max,slot,µ} per slot for each scheduled cell on the active DL BWP of the scheduling cell. N_{cells}^{cap} may be a value of capability information (pdcch-BlindDetectionCA) provided by the UE, or may be the number of DL cells configured.

### (PDCCH Repetition)

It has been studied that two linked SS sets for PDCCH repetition are configured/indicated by the RRC IE/MAC CE. It has been studied that two linked PDCCH candidates for PDCCH repetition are respectively in two linked SS sets, and have the same aggregation level and the same index.

The PDCCH/DCI to which repetition transmission is applied may be referred to as multi-PDCCH/multi-DCI. The repetition transmission of the PDCCH may be replaced with PDCCH repetition, multiple transmission of the PDCCH, multi-PDCCH transmission, multiple PDCCH transmission, MTR PDCCH, or the like.

The multi-PDCCH/multi-DCI may be respectively transmitted from different TRPs. The multi-PDCCH/DCI may be multiplexed using time division multiplexing (TDM)/frequency division multiplexing (FDM)/space division multiplexing (SDM).

For example, when repetition of the PDCCH (TDM PDCCH repetition) is performed by using the TDM, the PDCCH may be transmitted from a plurality of TRPs by using different time resources.

When FDM PDCCH repetition is performed, the PDCCH may be transmitted from a plurality of TRPs by using different frequency-time resources. In the FDM PDCCH repetition, at least one of two sets of resource element groups (REG), a control channel element (CCE) of a transmitted PDCCH, two transmitted PDCCH repetitions that do not overlap in frequency, and a transmitted PDCCH of a multi-chance that does not overlap in frequency may be associated with different TCI states.

When SDM PDCCH repetition is performed, the PDCCH may be transmitted from a plurality of TRPs by using the same time/frequency resource. In the SDM PDCCH repetition, PDCCH DMRSs in all REGs/CCEs of the PDCCH may be related to two TCI states. Note that, in the present disclosure, SDM may be replaced with a single frequency network (SFN).

The UE to which FDM/SDM PDCCH repetition is applied should be able to receive a plurality of beams (a plurality of QCL Type D channels/signals) simultaneously. However, whether the control of the collision of the PDCCH in a case where the UE can simultaneously receive a plurality of beams (a plurality of QCL Type D channels/signals) complies with the above-described constraint (priority rule) has not yet been studied. If this is not studied, transmission and reception of the UE is improperly restricted, and there is a possibility that throughput is reduced or communication quality is deteriorated.

It is preferable to use the priority rule suitable for at least one of the cases described below.
- A case of determining which PDCCH candidate/SS set is allocated in PDCCH overbooking.
- A case of determining which PDCCH candidate/CORESET to be monitored in QCL type D collision handling.
- A case of determining which PDCCH candidate is counted in two PDCCH candidates that have the same set of CCEs and that are associated with the same DCI size and the same scrambling.

In Rel. 15/16, a rule in which a lower SS set ID has a higher priority is used.

### (Analysis)

When one of the multiple PDCCH candidates linked for PDCCH repetition uses the same set of CCEs as an individual PDCCH candidate (PDCCH candidate not linked with another PDCCH candidate), and both of those PDCCH candidates are associated with the same DCI size, the same scrambling (RNTI), and the same CORESET, it has been studied that the UE follows Items 1 and 2 below.

### [Item 1]

The interpretation of the detected DCI is based on at least one new (Rel. 17) PDCCH repetition rule in Rules 1 to 3 below.

[[Rule 1]] If the UE reports three blind detections (BDs), an individual PDCCH candidate is monitored.

[[Rule 2]] If the UE reports two BDs, an individual PDCCH candidate is not monitored.

[[Rule 3]] In both cases of Rule 1 and Rule 2, an individual PDCCH candidate is not counted for the BD limit (maximum number of PDCCH candidates to be monitored).

Here, the three BDs may mean that the UE can decode by soft combining (soft combining of two individual DCI), which may have better PDCCH receiving performance. Here, the two BDs may mean that the UE cannot decode by soft combining (two individual DCI).

### [Item 2]

The UE capability for the maximum number of such overlap is introduced.

In Rel. 15, the PDCCHs can overlap, and there is a rule for dropping the PDCCHs.

If two PDCCH candidates use the same set of CCEs and both of the PDCCH candidates are associated with the same DCI size, the same scrambling (RNTI), and the same CORESET, it is assumed that one BD is counted. However, in the PDCCH repetition of Rel. 17, unlike Rel. 15/16, there is an increase in UE processing complexity for overlapping PDCCH candidates, so that the UE needs to determine, for each PDCCH candidate, whether or how to be linked, how to interpret the DCI, and the like, in order to determine how to decode the PDCCH candidates. For many problems (for example, timeline issues), reference PDCCH candidates need to be determined. If one BD is counted for such two or more overlapping PDCCH candidates, there is a possibility that the UE cannot perform PDCCH monitoring due to the increase in complexity described above even when the count does not exceed the BD limit. Therefore, UE capability for such PDCCH overlap is required.

Here, it is not clear how to define the UE capability and what operation the UE operation related to the UE capability is. When such UE capability/UE operation is not clear, there is a possibility of causing a decrease in communication quality, a decrease in communication throughput, and the like.

Therefore, the present inventors have conceived UE capability/UE operation for PDCCH overlap.

Hereinafter, embodiments according to the present disclosure will be described in detail with reference to the drawings. Radio communication methods according to the respective embodiments may be applied independently, or may be applied in combination.

In the present disclosure, "A/B/C" and "at least one of A, B and C" may be replaced with each other. In the present disclosure, the cell, the serving cell, the CC, the carrier, the BWP, the DL BWP, the UL BWP, the active DL BWP, the active UL BWP, and the band may be replaced with each other. In the present disclosure, the index, the ID, the indicator, and the resource ID may be replaced with each other. In the present disclosure, the sequence, the list, the set, the group, the cohort, the cluster, the subset, and the like may be replaced with each other. In the present disclosure, support, control, controllable, operate, and operable may be replaced with each other.

In the present disclosure, configure, activate, update, indicate, enable, specify, and select may be replaced with each other.

In the present disclosure, link, having a linkage, associate, correspond, map, repeat, and relate, may be replaced with each other. In the present disclosure, allocate, assign, monitor, and map may be replaced with each other.

In the present disclosure, the higher layer signaling may be any of, for example, radio resource control (RRC) signaling, medium access control (MAC) signaling, broadcast information, and the like, or a combination thereof. In the present disclosure, the RRC, the RRC signaling, the RRC parameter, the higher layer parameter, the RRC information element (IE), the RRC message, the configuration may be replaced with each other.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

In the present disclosure, the MAC CE and the activation/deactivation command may be replaced with each other.

In the present disclosure, the beam, the spatial domain filter, the spatial setting, the TCI state, the UL TCI state, the unified TCI state, the unified beam, the common TCI state, the common beam, the TCI assumption, the QCL assumption, the QCL parameter, the spatial domain reception filter, the UE spatial domain reception filter, the UE reception beam, the DL beam, the DL reception beam, the DL precoding, the DL precoder, the DL-RS, the QCL type D RS of the TCI state/QCL assumption, the QCL type A RS of the TCI state/QCL assumption, the spatial relation, the spatial domain transmission filter, the UE spatial domain transmission filter, the UE transmission beam, the UL beam, the UL transmission beam, the UL precoding, the UL precoder, the PL-RS, the antenna port, the panel group, and the beam group may be replaced with each other. In the present disclosure, the QCL type X-RS, the DL-RS associated with QCL type X, the DL-RS with QCL type X, a source of the DL-RS, the SSB, the CSI-RS, and the SRS may be replaced with each other.

In the present disclosure, the panel, the uplink (UL) transmission entity, the TRP, the spatial relation, the control resource set (CORESET), the PDSCH, the codeword, the base station, the antenna port (for example, a demodulation reference signal (DMRS) port) of a signal, the antenna port group (for example, a DMRS port group) of a signal, the group for multiplexing (for example, a code division multiplexing (CDM) group, a reference signal group, and a CORESET group), the CORESET pool, the CORESET subset, the CW, the redundancy version (RV), and the layer (MIMO layer, transmission layer, and spatial layer) may be replaced with each other.

The panel may relate to at least one of a group index of the SSB/CSI-RS group, a group index of the group-based beam reporting, and a group index of the SSB/CSI-RS group for the group-based beam reporting.

In addition, the panel identifier (ID) and the panel may be replaced with each other. That is, the TRP ID and the TRP, the CORESET group ID and the CORESET group, and the like may be replaced with each other.

In the present disclosure, the TRP, the transmission point, the panel, the DMRS port group, the CORESET pool, and one of two TCI states associated with one codepoint of the TCI field may be replaced with each other.

In the present disclosure, the single PDCCH may be assumed to be supported when multi-TRPs use ideal backhaul. The multi-PDCCHs may be assumed to be supported when the multi-TRPs use non-ideal backhaul.

Note that the ideal backhaul may be referred to as a DMRS port group type 1, a reference signal related group type 1, an antenna port group type 1, a CORESET pool type 1, and the like. Note that the non-ideal backhaul may be referred to as a DMRS port group type 2, a reference signal related group type 2, an antenna port group type 2, a CORESET pool type 2, and the like. The name is not limited thereto.

In the present disclosure, the single TRP, the single TRP system, the single TRP transmission, and the single PDSCH may be replaced with one another. In the present disclosure, the multi-TRPs, the multi-TRP system, the multi-TRP transmission, and the multi-PDSCHs may be replaced with each other. In the present disclosure, the single DCI, the single PDCCH, the single-DCI-based multi-TRPs, and that two TCI states on at least one TCI codepoint are activated may be replaced with each other.

In the present disclosure, the single TRP, the channel using a single TRP, the channel using one TCI state/spatial relation, that the multi-TRPs are not enabled by the RRC/DCI, that the multiple TCI states/spatial relations are not enabled by the RRC/DCI, and that a CORESET pool index (CORESETPoolIndex) value of 1 is not configured for any CORESET and no codepoint in the TCI field is mapped to two TCI states may be replaced with each other.

In the present disclosure, the multi-TRPs, the channel using multi-TRPs, the channel using a plurality of TCI states/spatial relations, that the multi-TRPs are enabled by the RRC/DCI, that the plurality of TCI states/spatial relations are enabled by the RRC/DCI, and at least one of the single-DCI-based multi-TRPs and the multi-DCI-based multi-TRPs may be replaced with each other. In the present disclosure, the multi-DCI-based multi-TRPs and that a CORESET pool index (CORESETPoolIndex) value of 1 is configured for the CORESET may be replaced with each other. In the present disclosure, the single-DCI-based multi-TRPs and that at least one codepoint of the TCI field is mapped to two TCI states may be replaced with each other.

In the present disclosure, TRP #1 (first TRP) may correspond to CORESET pool index = 0, or may correspond to a first TCI state of two TCI states corresponding to one codepoint of the TCI field. TRP #2 (second TRP) TRP #1 (first TRP) may correspond to CORESET pool index = 1, or may correspond to a second TCI state of two TCI states corresponding to one codepoint of the TCI field.

In the present disclosure, the DMRS, the DMRS port, and the antenna port may be replaced with each other.

In the present disclosure, the QCL and the QCL type D may be replaced with each other.

In the present disclosure, the number of PDCCH candidates to be monitored and the number of blind detections (BDs) may be replaced with each other. The number of non-overlapped CCEs, the number of CCEs for channel estimation, and the number of CCEs may be replaced with each other.

In the present disclosure, the limitation, the upper limit, the limit, the restriction, and the maximum number may be replaced with each other.

In the present disclosure, the slot, the span, the consecutive symbol, the time domain resource, and the PDCCH monitoring occasion may be replaced with each other. In the present disclosure, the serving cell, the BWP, the CC, the band, all the CCs across the plurality of bands, and the frequency domain resource may be replaced with each other.

In the present disclosure, the individual PDCCH candidate may be a PDCCH candidate that is not configured to be linked (have a linkage) with other PDCCH candidates for PDCCH repetition.

### (Radio Communication Method)

In the present disclosure, that the priority of a certain candidate A (for example, PDCCH candidate, SS set) is higher than the priority of a target B, that the candidate A is monitored in preference to a candidate B, and that the candidate A is allocated in preference to the candidate B may be replaced with each other.

In the present disclosure, that the SS set/PDCCH candidate/PDCCH candidate in the SS set can be allocated/monitored, that there is room for a sufficient number of targets for the SS set/PDCCH candidate/PDCCH candidate in the SS set, that there is a remaining number of targets up to a maximum number for the SS set/PDCCH candidate/the PDCCH candidate in the SS set, and that there is a sufficient number of targets for the SS set/PDCCH candidate/the PDCCH candidate in the SS set may be replaced with each other.

The plurality of SS sets (SS set pair) having a linkage (coupling, cooperation) may mean that one SS set is linked with the other SS set via the RRC IE/MAC CE for PDCCH repetition. An SS set without linkage (individual SS set) may mean that the SS set is not linked with another SS set via the RRC IE/MAC CE and via the RRC IE/MAC CE.

In the present disclosure, having a linkage, linked, and pair may be replaced with each other. In the present disclosure, having no linkage, not linked, and individual may be replaced with each other.

"Priority of SS set #A > priority of SS set #B" may mean that the priority of SS set #A is higher than the priority of SS set #B, and that SS set #A is allocated/monitored in preference to SS set #B.

A CSS set having a linkage may or may not be supported. If not supported, in the priority rule of each embodiment, a CSS set having a linkage may be ignored.

The SS set ID of an SS set pair may refer to a lower SS set ID in the two linked SS sets. For example, in a pair of linked SS sets {SS set ID #x, SS set ID #y}, when ID #x is lower than ID #y, the SS set ID of that pair of SS sets for comparison may refer to ID #x.

In each of the following embodiments, allocating a pair of linked SS sets together may mean Operations 1 and 2 below.

### [Operation 1]

When both SS sets can be allocated, both SS sets are allocated.

### [Operation 2]

When both SS sets cannot be allocated, one of Operations 2-1 and 2-2 below is performed.

[[Operation 2-1]] Both SS sets are not allocated.

[[Operation 2-2]] If an SS set having a lower ID among the pair can be allocated, the SS set is allocated.

In the present disclosure, two linked SS sets for PDCCH repetition, two linked PDCCH candidates for PDCCH repetition, two PDCCH candidates associated with two linked SS sets, two linked CORESETs for PDCCH repetition, and two CORESETs respectively associated with two linked SS sets may be replaced with each other.

In the present disclosure, at least one of the overlapping event, the overlapping, that two or more PDCCH candidates overlap (with each other) in the time domain/frequency domain, and a set/group of the two or more PDCCH candidates may be used.

In the present disclosure, the specific range may be at least one of the slot, the span, the PDCCH monitoring occasion, the serving cell, the BWP, the CC, the band, all CCs across multiple bands, and the overlapping event. In the present disclosure, the span, a period having a duration, the subslot, and the X symbol may be replaced with each other.

<First Embodiment>

UE capability (capability information) for the number of targets (the number of targets, the specific number) for overlapping PDCCH candidates per specific range may be defined.

The UE capability may indicate a maximum number of targets. The target may be at least one of Targets 1 to 3 below.

### [Target 1]

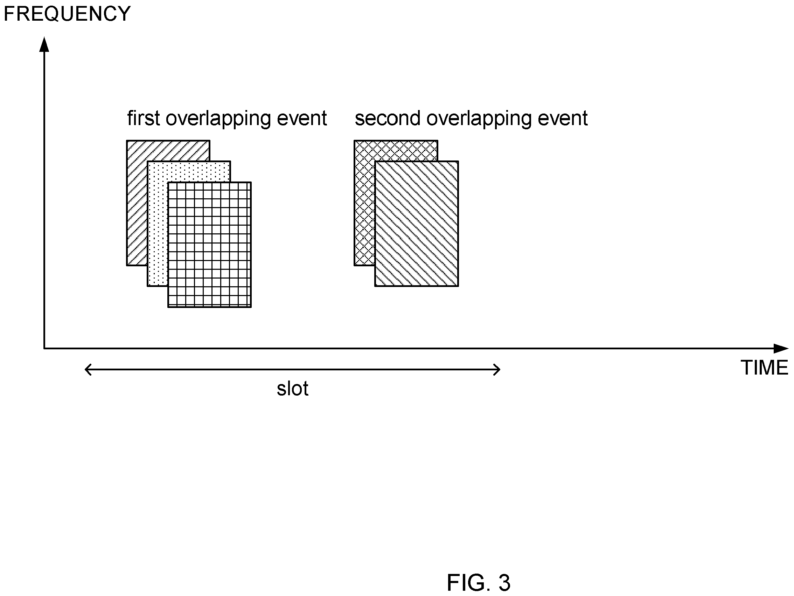

The target may be an overlapping event for each specific range. The number of targets may be the number of overlapping events for each specific range. Even when two or more PDCCH candidates overlap, the overlap may be counted as one overlapping event. In the example of Fig. 3, the specific range is a slot. There are two overlapping events in one slot.

### [Target 2]

The target may be PDCCH candidates that overlap (each other) for each overlapping event. The number of targets may be the number of overlapping PDCCH candidates for each overlapping event. In the example of Fig. 3, there are two overlapping events in one slot. In the first overlapping event, the number of overlapping PDCCH candidates is three, and in the second overlapping event, the number of overlapping PDCCH candidates is two.

### [Target 3]

The target may be PDCCH candidates (PDCCH candidates in all overlapping events) that overlap (with another PDCCH candidate) in all overlapping events for each specific range. The number of targets may be the total number of PDCCH candidates (total number of PDCCH candidates in all overlapping events) that overlap (with another PDCCH candidate) in all overlapping events for each specific range. In the example of Fig. 3, the specific range is a slot. There are two overlapping events in one slot. In the first overlapping event, the number of overlapping PDCCH candidates is three, and in the second overlapping event, the number of overlapping PDCCH candidates is two. The total number of PDCCH candidates in all overlapping events is five.

According to this embodiment, the UE can properly monitor the PDCCH candidates that meet the UE capability.

### <Second Embodiment>

For the UE capability in the first embodiment, the UE may follow at least one of Options 1 to 4 below.

### <<Option 1»

The UE does not assume the number of targets that exceeds the UE capability (maximum number reported as UE capability).

### <<Option 2>>

The number of targets may exceed the UE capability (maximum quantity reported as the UE capability). When the number of targets exceeds the UE capability, the UE may not monitor some PDCCH candidates determined by a specific rule.

The UE may determine/allocate/count/select/monitor one or more PDCCH candidates among the configured PDCCH candidates provided that the number of targets is equal to or less than the maximum quantity.

In Option 2, the UE may follow at least one of Options 2-1 and 2-2.

### [Option 2-1]

The PDCCH candidates may be allocated/monitored at the granularity of SS sets.

The priority (priority order) of the SS set may be according to at least one of Criteria 1 to 6 below.

### [Criterion 1]

Priority of serving cell with lower index > priority of serving cell with higher index (alternatively, priority of serving cell with higher index > priority of serving cell with lower index). When the specific range is a serving cell, this criterion may be unnecessary.

### [Criterion 2]

Priority of CSS > priority of USS. When the PDCCH overlapping is applied only to the USS, this criterion may be unnecessary.

### [Criterion 3]

Priority of SS set with lower ID > priority of SS set with higher ID (alternatively, priority of SS set with higher ID > priority of SS set with lower ID).

### [Criterion 4]

Priority of linked SS set > priority of individual (unlinked) SS set (alternatively, priority of individual (unlinked) SS set > priority of linked SS set).

### [Criterion 5]

Priority of linked SS set pair with lower SS set ID > priority of linked SS set pair with higher SS set ID (alternatively, priority of linked SS set pair with higher SS set ID > priority of linked SS set pair with lower SS set ID). The SS set ID of a linked SS set pair may refer to a lower/higher SS set ID in the two linked SS sets in that SS set pair.

### [Criterion 6]

Priority of PDCCH monitoring occasion starting at earlier time > priority of PDCCH monitoring occasion starting at later time (alternatively, priority of PDCCH monitoring occasion ending at earlier time > priority of PDCCH monitoring occasion ending at later time) (alternatively, priority of PDCCH monitoring occasion starting at later time > priority of PDCCH monitoring occasion starting at earlier time) (alternatively, priority of PDCCH monitoring occasion ending at later time > priority of PDCCH monitoring occasion ending at earlier time).

Based on the above priorities, an SS set having a higher priority may be preferentially allocated/monitored for each slot/span/PDCCH monitoring occasion.

X = 0 (target counter) may be set, and Processing 1 and 2 below may be performed on the target for each SS set (in order of higher priority) based on the above priorities. Processing 1 and 2 may be repeated for all SS sets (alternatively, until X reaches the maximum number of targets).

### [Processing 1]

The number of targets for all the PDCCH candidates in the SS set is added to X. That is, X_new = X_old + number of targets. If a certain target has already been counted in any SS set preceding the SS set, the target is not counted, and the number of targets may not be added to X.

### [Processing 2]

After the number of targets is added, if X is less than or equal to the maximum number of targets, the PDCCH candidates in that SS set are allocated/monitored. If X is greater than the maximum number of targets, the SS set and all SS sets having a lower priority than the priority of the SS set are not allocated/monitored.

If a certain PDCCH candidate is not allocated, the UE may not monitor the PDCCH candidate or may not be required to monitor the PDCCH candidate.

### [Option 2-2]

The PDCCH candidates may be allocated/monitored at the granularity of PDCCH candidates.

The priority (priority order) of the PDCCH candidate may be according to at least one of Criteria 1 to 7 below. The SS set in each criterion may be an SS set associated with the PDCCH candidate.

### [Criterion 1]

Priority of serving cell with lower index > priority of serving cell with higher index (alternatively, priority of serving cell with higher index > priority of serving cell with lower index). When the specific range is a serving cell, this criterion may be unnecessary.

### [Criterion 2]

Priority of CSS > priority of USS. When the PDCCH overlapping is applied only to the USS, this criterion may be unnecessary.

### [Criterion 3]

Priority of SS set with lower ID > priority of SS set with higher ID (alternatively, priority of SS set with higher ID > priority of SS set with lower ID).

### [Criterion 4]

Priority of linked SS set > priority of individual (unlinked) SS set (alternatively, priority of individual (unlinked) SS set > priority of linked SS set).

### [Criterion 5]

Priority of linked SS set pair with lower SS set ID > priority of linked SS set pair with higher SS set ID (alternatively, priority of linked SS set pair with higher SS set ID > priority of linked SS set pair with lower SS set ID). The SS set ID of a linked SS set pair may refer to a lower/higher SS set ID in the two linked SS sets in that SS set pair.

### [Criterion 6]

Priority of PDCCH candidate with lower index > priority of PDCCH candidate with higher index (alternatively, priority of PDCCH candidate with higher index > priority of PDCCH candidate with lower index).

### [Criterion 7]

Priority of PDCCH monitoring occasion/PDCCH candidate starting at earlier time > priority of PDCCH monitoring occasion/PDCCH candidate starting at later time (alternatively, priority of PDCCH monitoring occasion/PDCCH candidate ending at earlier time > priority of PDCCH monitoring occasion/PDCCH candidate ending at later time) (alternatively, priority of PDCCH monitoring occasion/PDCCH candidate starting at later time > priority of PDCCH monitoring occasion/PDCCH candidate starting at earlier time) (alternatively, priority of PDCCH monitoring occasion/PDCCH candidate ending at later time > priority of PDCCH monitoring occasion/PDCCH candidate ending at earlier time).

Based on the above priorities, a PDCCH candidate having a higher priority may be preferentially allocated/monitored for each slot/span/PDCCH monitoring occasion.

X = 0 (target counter) may be set, and Processing 1 and 2 below may be performed on the target for each PDCCH candidate (in order of higher priority) based on the above priorities. Processing 1 and 2 may be repeated for all SS sets (alternatively, until X reaches the maximum number of targets).

### [Processing 1]

The number of targets for the PDCCH candidates is added to X. That is, X_new = X_old + number of targets. If a certain target has already been counted in any PDCCH candidate preceding the PDCCH candidate, the target is not counted, and the number of targets may not be added to X.

### [Processing 2]

After the number of targets is added, if X is less than or equal to the maximum number of targets, the PDCCH candidate is allocated/monitored. If X is greater than the maximum number of targets, the PDCCH candidate and all PDCCH candidates having a lower priority than the priority of the PDCCH candidate are not allocated/monitored.

If a certain PDCCH candidate is not allocated, the UE may not monitor the PDCCH candidate or may not be required to monitor the PDCCH candidate.

### <<Option 3»

Based on Option 2, two linked SS sets/PDCCH candidates in the same slot/same span/same PDCCH monitoring occasion may be counted together, allocated together, or monitored together.

If both of the two linked SS sets/PDCCH candidates cannot be allocated/monitored, but one SS set/PDCCH candidate with a higher priority among the two SS sets/PDCCH candidates can be allocated/monitored, operation on the two SS sets/PDCCH candidates may be according to any of Choices 1 and 2 below.

### [Choice 1]

One SS set/PDCCH candidate with higher priority is allocated/monitored.

### [Choice 2]

Both of the two SS sets/PDCCH candidates are dropped (not allocated/monitored).

### <<Option 4>>

Different options among Options 1 to 3 may be applied to the PCell (SpCell) and the SCell. For example, only Option 2 may be supported for the PCell, and Option 2 may be supported for the SCell.

According to this embodiment, the base station/UE can properly allocate/monitor the SS sets/PDCCH candidates.

### <Other Embodiments>

### <Variations>

In the overlapping event of each of the above embodiments, the PDCCH candidate overlapping another PDCCH candidate may be at least one of those described below.
- An individual PDCCH candidate that overlaps another individual PDCCH candidate.
- An individual PDCCH candidate that overlaps one of a plurality of PDCCH candidates linked for PDCCH repetition.
- One of a plurality of PDCCH candidates linked for PDCCH repetition that overlaps one of the plurality of PDCCH candidates linked for PDCCH repetition. Only overlapping PDCCH candidates between two linked PDCCH candidates may be counted. PDCCH candidates overlapping other unlinked (individual) PDCCH candidates may not be counted. Both PDCCH candidates that overlap between two linked PDCCH candidates and PDCCH candidates that overlap other unlinked (individual) PDCCH candidates may be counted.

A PDCCH candidate that overlaps another PDCCH candidate may be at least one of those described below.
- Individual PDCCH candidate (PDCCH candidate not linked with another PDCCH candidate).
- Linked PDCCH candidate (PDCCH candidate linked with another PDCCH candidate).

Different UE capabilities may be defined for the individual PDCCH candidate and the linked PDCCH candidate. The UE capability may be according to each of the above embodiments.

When there is at least one SS set configured to be linked with another SS set within a specific range, each of the above embodiments may be applied.

Only when there is at least one SS set configured to be linked with another SS set within a specific range, each of the above embodiments may be applied to the specific range.

### <<UE Capability Information/Higher Layer Parameter>>

A higher layer parameter (RRC IE)/UE capability corresponding to a function (feature) in each of the above embodiments may be defined. The higher layer parameter may indicate whether or not to enable the function. The UE capability may indicate whether the UE supports the function.

The UE in which the higher layer parameter corresponding to the function is configured may perform the function. "The UE in which the higher layer parameter corresponding to the function is not configured does not perform the function (for example, according to Rel. 15/16)" may be defined.

The UE that has reported/transmitted the UE capability indicating support for the function may perform the function. "The UE that does not report the UE capability indicating support for the function does not perform the function (for example, according to Rel. 15/16)" may be defined.

When the UE reports/transmits the UE capability indicating to support the function, and a higher layer parameter corresponding to the function is configured, the UE may perform the function. "When the UE does not report/transmit the UE capability indicating to support the function or the higher layer parameter corresponding to the function is not configured, the UE does not perform the function (for example, according to Rel. 15/16)" may be defined.

Among the foregoing plurality of embodiments, which embodiment/option/choice/function is used may be configured by higher layer parameters, may be reported by the UE as UE capability, may be defined in the specifications, or may be determined by the reported UE capability and the configuration of the higher layer parameters.

The function may be PDCCH repetition where the UE uses two linked PDCCHs/PDCCH candidates/SS sets.

The UE capability may indicate a maximum number of targets per specific range (first embodiment).

The function may be that the number of targets configured by the network exceeds a maximum number of targets (second embodiment).

With the above UE capability/higher layer parameters, the UE can realize the above functions while maintaining compatibility with the existing specifications.

### (Radio Communication System)

Hereinafter, a configuration of a radio communication system according to one embodiment of the present disclosure will be described. In the radio communication system, communication is performed by using any one or a combination of the above-described radio communication methods according to the embodiments of the present disclosure.

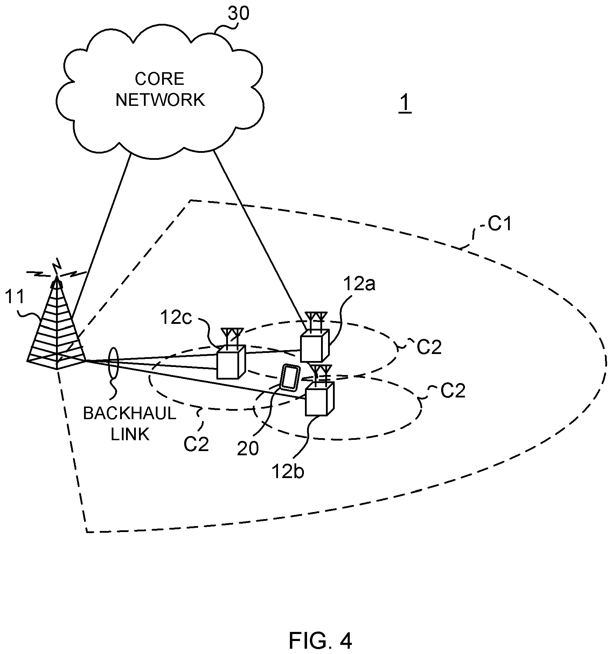

Fig. 4 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

In addition, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

In addition, the user terminal 20 may perform communication in each CC using at least one of time division duplex (TDD) or frequency division duplex (FDD).

The plurality of base stations 10 may be connected by wire (e.g., an optical fiber or an X2 interface in compliance with common public radio interface (CPRI)) or wirelessly (e.g., NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

In addition, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. User data, higher layer control information, and the like may be transmitted on the PUSCH. In addition, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space based on search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". In addition, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

In addition, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

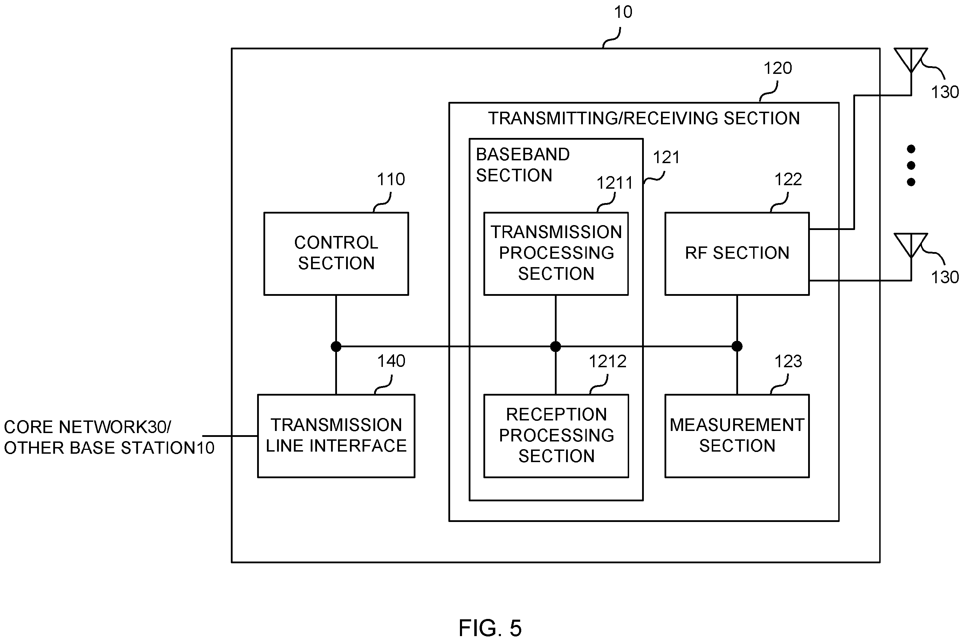

Fig. 5 is a diagram illustrating an example of a configuration of the base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be implemented by a controller, a control circuit, and the like that are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may include the reception processing section 1212, the RF section 122, and the measurement section 123.

The transmitting/receiving antennas 130 can be implemented by antennas described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, and may transmit a signal in the radio frequency range via the transmitting/receiving antenna 130.

Meanwhile, the transmitting/receiving section 120 (RF section 122) may perform amplification, filtering processing, demodulation to a baseband signal, and the like on the signal in the radio frequency range received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that the transmitting section and the receiving section of the base station 10 in the present disclosure may include at least one of the transmitting/receiving section 120, the transmitting/receiving antenna 130, or the transmission line interface 140.

The transmitting/receiving section 120 may receive capability information indicating a maximum number of targets regarding overlapping among a plurality of physical downlink control channel (PDCCH) candidates. The control section 110 may determine, based on the maximum number, one or more PDCCH candidates to be monitored.

### (User Terminal)

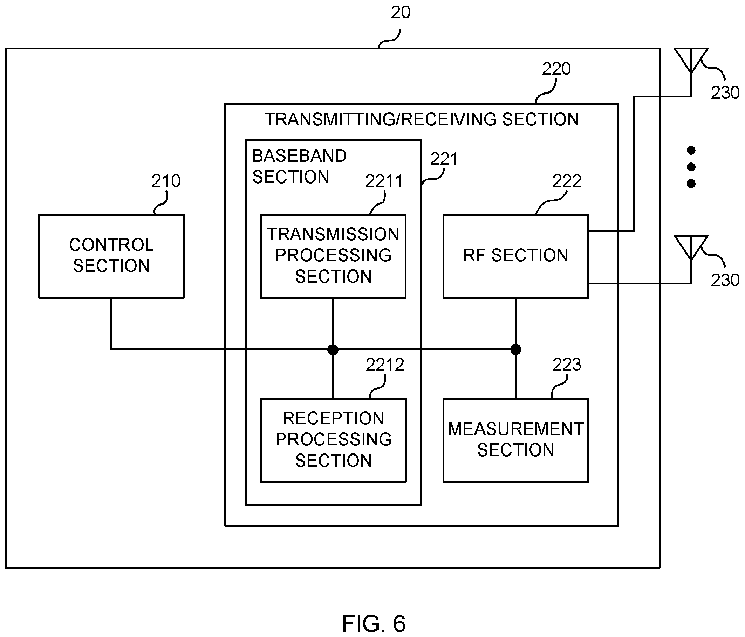

Fig. 6 is a diagram illustrating an example of a configuration of the user terminal according to one embodiment. The user terminal 20 includes a control section 210, a transmitting/receiving section 220, and a transmitting/receiving antenna 230. Note that one or more of the control sections 210, one or more of the transmitting/receiving sections 220, and one or more of the transmitting/receiving antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may forward the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be implemented by a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described based on common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (e.g., PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that, the transmitting section and the receiving section of the user terminal 20 in the present disclosure may include at least one of the transmitting/receiving section 220 and the transmitting/receiving antenna 230.

The transmitting/receiving section 220 may transmit capability information indicating a maximum number of targets regarding overlapping among a plurality of physical downlink control channel (PDCCH) candidates. The control section 210 may determine, based on the maximum number, one or more PDCCH candidates to be monitored.

When the number of targets exceeds the maximum number, the control section 210 may determine the one or more PDCCH candidates at the granularity of search space sets or PDCCH candidates.

The control section 210 may not assume that the number of targets exceeds the maximum number.

The target may be at least one of overlapping within a specific range, a PDCCH candidate in one overlapping, and a PDCCH candidate in all overlapping within the specific range.

### (Hardware Configuration)

Note that the block diagrams that have been used to describe the above embodiments illustrate blocks in functional units. These functional blocks (components) may be implemented in arbitrary combinations of at least one of hardware or software. In addition, the method for implementing each functional block is not particularly limited. That is, each functional block may be implemented by a single apparatus physically or logically aggregated, or may be implemented by directly or indirectly connecting two or more physically or logically separate apparatuses (using wires, radio, or the like, for example) and using these apparatuses. The functional block may be realized by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

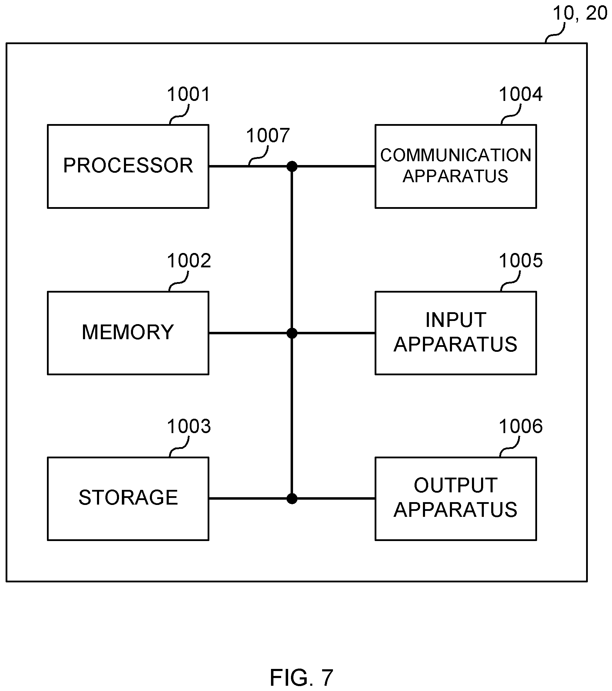

For example, the base station, the user terminal, and the like according to one embodiment of the present disclosure may function as a computer that executes the processing of the radio communication method of the present disclosure. Fig. 7 is a diagram illustrating an example of the hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. In addition, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by reading given software (program) on hardware such as the processor 1001 and the memory 1002, and by controlling the operation in the processor 1001 , the communication in the communication apparatus 1004, and at least one of the reading or writing of data in the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

In addition, the processor 1001 reads programs (program codes), software modules, data, etc. from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, etc. that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as secondary storage apparatus.

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

In addition, these pieces of apparatus, including the processor 1001, the memory 1002 and so on are connected by the bus 1007 so as to communicate information. The bus 1007 may be formed with a single bus, or may be formed with buses that vary between pieces of apparatus.

In addition, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Modifications)

Note that terms described in the present disclosure and terms necessary for understanding the present disclosure may be replaced with terms that have the same or similar meanings. For example, a channel, a symbol, and a signal (signal or signaling) may be replaced with each other. In addition, the signal may be a message. The reference signal can be abbreviated as an RS, and may be referred to as a pilot, a pilot signal, and the like, depending on which standard applies. In addition, a component carrier (CC) may be referred to as a cell, a frequency carrier, a carrier frequency, and the like.

A radio frame may be comprised of one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). In addition, a slot may be a time unit based on numerology.

The slot may include a plurality of mini slots. Each mini slot may include one or more symbols in the time domain. In addition, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

A radio frame, a subframe, a slot, a minislot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot" and so on, instead of a "subframe."

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be a transmission time unit of a channel-coded data packet (transport block), a code block, a codeword, etc. or may be a processing unit of scheduling, link adaptation, etc. Note that when the TTI is given, a time interval (e.g., the number of symbols) to which a transport block, a code block, a codeword, or the like is actually mapped may be shorter than the TTI.

Note that, when one slot or one minislot is referred to as a "TTI", one or more TTIs (that is, one or multiple slots or one or more minislots) may be the minimum time unit of scheduling. In addition, the number of slots (the number of minislots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more consecutive subcarriers in the frequency domain. The number of subcarriers included in the RB may be the same regardless of the numerology, and may be twelve, for example. The number of subcarriers included in an RB may be determined based on a numerology.

In addition, an RB may include one or more symbols in the time domain, and may be one slot, one minislot, one subframe or one TTI in length. One TTI, one subframe, etc. may each be comprised of one or more resource blocks.

Note that one or more RBs may be referred to as a physical resource block (PRB), a subcarrier group (SCG), a resource element group (REG), a PRB pair, an RB pair, and the like.

In addition, a resource block may include one or more resource elements (REs). For example, one RE may be a radio resource field of one subcarrier and one symbol.

A bandwidth part (BWP) (which may be referred to as a partial bandwidth or the like) may represent a subset of consecutive common resource blocks (RBs) for a certain numerology in a certain carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a given signal/channel outside the active BWP. Note that "cell", "carrier", etc. in the present disclosure may be replaced with "BWP".

Note that the structures of radio frames, subframes, slots, minislots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

In addition, the information, parameters, etc. described in the present disclosure may be represented using absolute values, or may be represented using relative values with respect to given values, or may be represented using other corresponding information. For example, a radio resource may be specified by a given index.

The names used for parameters etc. in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, etc. described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

In addition, information, signals, etc. can be output in at least one of a direction from a higher layer to a lower layer or a direction from a lower layer to a higher layer. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. In addition, the RRC signaling may be referred to as an RRC message, and may be, for example, an RRC connection setup message, an RRC connection reconfiguration message, and the like. In addition, notification of the MAC signaling may be performed using, for example, an MAC control element (CE).

In addition, reporting of given information (for example, reporting of information to the effect that "X holds") does not necessarily have to be sent explicitly, and can be sent implicitly (for example, by not reporting the given information, by reporting other information, and so on).

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

In addition, software, commands, information and so on may be transmitted and received via transmissionmedium. For example, when software is transmitted from a website, a server, or other remote sources by using at least one of a wired technology (coaxial cable, optical fiber cable, twisted pair cable, digital subscriber line (DSL), or the like) or a wireless technology (infrared light, microwave, and the like), at least one of the wired technology or the wireless technology is included within the definition of the transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, indoor small base station (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be called as a transmitting apparatus, a receiving apparatus, a wireless communication apparatus, and the like. Note that at least one of the base station or the mobile station may be a device mounted on a moving object, a moving object itself, and the like. The moving object may be a vehicle (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

In addition, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. In addition, terms such as "uplink" and "downlink" may be replaced with words corresponding to terminal-to-terminal communication (for example, "sidelink"). For example, an uplink channel, a downlink channel, and the like may be replaced with a sidelink channel.

Similarly, the user terminal in the present disclosure may be replaced with the base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. In addition, the order of processing procedures, sequences, flowcharts, and the like of the aspects/embodiments described in the present disclosure may be reordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal)), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. In addition, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

All references to the elements using designations such as "first" and "second" as used in the present disclosure do not generally limit the amount or sequence of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

In addition, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, "determining" may be replaced with "assuming", "expecting", "considering", or the like.

The "maximum transmission power" described in the present disclosure may mean a maximum value of transmission power, nominal UE maximum transmit power, or rated UE maximum transmit power.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

This application is based on Japanese Patent Application No. 2021-139364 filed on August 27, 2021. The contents of this are all incorporated herein.

## Claims

1. A terminal comprising:
a transmitting section that transmits capability information indicating a maximum number of targets regarding overlapping between a plurality of physical downlink control channel (PDCCH) candidates; and
a control section that determines, based on the maximum number, one or more PDCCH candidates to be monitored.

2. The terminal according to claim 1, wherein the control section determines, when a number of the targets exceeds the maximum number, the one or more PDCCH candidates at a granularity of search space sets or PDCCH candidates.

3. The terminal according to claim 1, wherein the control section does not assume that a number of the targets exceeds the maximum number.

4. The terminal according to any of claims 1 to 3, wherein the target is at least one of overlapping within a specific range, a PDCCH candidate in one overlapping, and a PDCCH candidate in all overlapping within the specific range.

5. A radio communication method of a terminal, the method comprising:
transmitting capability information indicating a maximum number of targets regarding overlapping between a plurality of physical downlink control channel (PDCCH) candidates; and
determining, based on the maximum number one or more PDCCH candidates to be monitored.

6. A base station comprising:
a receiving section that receives capability information indicating a maximum number of targets regarding overlapping between a plurality of physical downlink control channel (PDCCH) candidates; and
a control section that determines, based on the maximum number, one or more PDCCH candidates to be monitored.
